# EUROPEAN PATENT APPLICATION

(11) **EP 2 631 471 A1**
(43) Date of publication of application: **28.08.2013**
(21) Application number: 12156865.3
(22) Date of filing: 24.02.2012
(51) Int. Cl.: F03D 7/04, F03D 7/02

(54) **Wind park**

(71) Applicant: Siemens Aktiengesellschaft, 80333 München (DE)
(72) Inventor: Thomsen, Kim, 7430 Ikast (DK)

(57) **Abstract**

The invention describes a wind park (1) comprising at least one wind turbine (1A) of a first type, wherein a wind turbine (1A) of the first type comprises a wind parameter measuring system (2) for measuring wind-related parameters; at least one wind turbine (1B) of a second type, wherein a wind turbine (1B) of the second type does not comprise a wind parameter measuring system (2); and a data-sharing arrangement (3) for providing a wind turbine (1B) of the second type with wind-related parameters derived from wind-related parameters collected by a wind turbine (1A) of the first type. The invention also describes a wind turbine (1A, 1B) for use in such a wind park (1), and a method of controlling such a wind park (1).

## Description

The invention describes a wind park, a wind turbine for a wind park; and a method of controlling a wind park.

In order to be able to respond to changes in wind direction, wind strength etc., a wind turbine is usually equipped with one or more sensors for measuring wind-related parameters such as wind speed and wind direction. The measurements can be used directly by a controller of the wind turbine. For example, the controller can use these measurements to compute a yaw angle correction for a yaw drive, so that the hub can be turned to face into the wind. The wind speed measurements are very important, since these can indicate whether preventive measures should be taken in order to avoid damage to the wind turbine, for example the rotor blades may be pitched out of the wind or the rotor may be stopped in the case of high wind. Such measurements are also used as a basis for determining the operational parameters of the wind turbine, for example to maximize energy production.

The sensors can comprise mechanical sensors. For example, a wind vane can be used for estimating the wind direction. To estimate wind speed, a cup anemometer or windmill anemometer could be used. More exact data can be collected by electronic sensors, for example a sonic anemometer. Each type of sensor is usually equipped with some kind of interface to convert the measurements, if necessary, into a digital form, and to forward these to an input of a device or unit that can process or interpret the data. To obtain accurate measurements, the sensors are generally mounted at an appropriate position on the outside of the nacelle. This means that, if a sensor should fail, a maintenance procedure is necessary to repair or replace the sensor. It may also be necessary to shut down the wind turbine as long as it does not receive any wind-related measurements. Therefore, the sensors are usually mounted in duplicate, i.e. with redundancy, so that, for example, a second functioning anemometer can take over if the first anemometer should fail.

In present-day wind parks, and more particularly future wind parks, the number of wind turbines can be quite large. For example, an offshore wind park can easily comprise in the order of a hundred wind turbines, and wind park sizes will most likely tend to increase in future. The wind measurement sensors, particularly since two of each must be provided for each wind turbine, therefore present a considerable factor in the overall costs of a prior art wind park. Each measurement system must be installed and connected to the controller of the wind turbine, and each measurement system must be maintained.

It is therefore an object of the invention to provide a more economical realisation of a wind park.

This object is achieved by the wind park of claim 1; by the wind turbine of claim 11; and by the method of claim 12 of controlling a wind park.

According to the invention, the wind park comprises at least one wind turbine of a first type, wherein a wind turbine of the first type comprises a wind parameter measuring system; at least one wind turbine of a second type, wherein a wind turbine of the second type does not comprise a wind parameter measuring system; and a data-sharing arrangement for providing a wind turbine of the second type with wind data obtained by a wind turbine of the first type.

The wind park according to the invention can therefore comprise significantly less wind parameter measuring systems than a prior art wind park, with the advantage that the costs of installation and maintenance of wind parameter measuring systems can be significantly, even radically, reduced. The invention makes use of the fact that wind passing through a wind park will exhibit essentially homogenous behaviour at least over parts of the wind park. For example, the wind speed may be assumed to be relatively constant over a part of the wind park, and the same applies to the wind direction or other measureable parameters such as temperature, air pressure etc. By collecting such information at selected points using equipment mounted only on wind turbines of the first type, and by sharing this information with the wind turbines of the second type, the wind park according to the invention can be realised at considerably lower cost, but its wind turbines can still respond as accurately to any changes in the wind conditions.

According to the invention, the wind turbine for use in such a wind park is realised to perform as a wind turbine of the first type, with a wind parameter measuring system for measuring wind-related parameters and a wind data output for sharing the wind-related parameters with other wind turbines of the wind park; or as a wind turbine of the second type, with a wind data input for obtaining wind-related parameters from a remote source in that wind park.

A new wind park can be planned using wind turbines according to the invention, so that some wind turbines can be constructed from the outset without any wind parameter measuring systems, while others are built to include wind parameter measuring systems. The wind turbines of the second type are, instead, provided with a wind data input so that these can simply receive wind data from another source, for example from one or more wind turbines of the first type.

According to the invention, the method of controlling such a wind park comprises the steps of collecting wind-related parameters by a wind parameter measuring system of a wind turbine of the first type; processing the wind-related parameters in a data-sharing arrangement of the wind park to derive wind data and providing the wind data to a wind turbine of the second type.

An advantage of the method according to the invention is that the processing of wind data need not be performed by each wind turbine individually, as is the case for a prior art wind park, but can be conveniently carried out in the data-sharing arrangement, for example at one central point or at only a few points, and this information can then be shared with the wind turbines of the second types. Resources such as analysis modules can therefore be utilised or deployed in a more efficient manner.

Particularly advantageous embodiments and features of the invention are given by the dependent claims, as revealed in the following description. Features of different claim categories may be combined as appropriate to give further embodiments not described herein.

In the following, the term "wind park" is used in its usual context, i.e. an arrangement of wind turbines placed in relative proximity to each other and collectively feeding into an electricity grid. The wind park can be on land or offshore. The wind turbines of a wind park are generally also controlled by a common park controller, usually referred to as a "park pilot".

In the following, without restricting the invention in any way, it may be assumed that a wind turbine is realised to respond in the usual manner to changes in wind speed or wind direction, for example by means of a yaw drive for changing the direction of the nacelle, hub and rotor, by means of a pitching system for changing the pitch angle of the rotor blades, etc.

The wind turbines of the first type (referred to simply as "first-type wind turbines" in the following) can provide their collected wind data to the data sharing arrangement over any suitable communications means. Equally, the data sharing arrangement can provide the wind turbines of the second type (referred to simply as "second-type wind turbines" in the following) with wind data using any suitable communications means. In a particularly preferred embodiment of the invention, the data-sharing arrangement comprises a network for connecting control means of the wind turbines of the wind park. Such a network can comprise a local area network (LAN) connecting the turbine controllers of the wind turbines of the wind park. This is a particularly advantageous realisation, since the turbine controller of a wind turbine is generally already realised to respond to wind data and to control the relevant components (yaw drive, pitch controller, etc.). This embodiment can require a minimum of alterations, since the turbine controllers of the wind turbines of a wind park are generally already connected together using some kind of network.

The wind data can be collected and then distributed using a dedicated data-sharing arrangement located at some suitable point relative to the wind turbines. However, in a preferred embodiment of the invention, the data-sharing arrangement is located in a park controller of that wind park. This might be a particularly advantageous realisation, since a park controller is generally already equipped with processing units for processing data, and with communication means for communicating with the wind turbines of the wind park.

In one preferred embodiment of the invention, the data-sharing arrangement can comprise a distributed system, which distributed system comprises processing units of the wind turbines of the wind park. For example, the wind data delivered by a first-type wind turbine can be analysed or otherwise processed in an analysis unit of that first-type wind turbine before being passed on, for example before being fed into the network. Equally, the first-type wind turbines can simply feed their wind data into the network, and any turbine controller, regardless of whether it is in a first-type wind turbine or a second-type wind turbine, can analyse the data, for example to decide which second-type wind turbine should receive wind data originating from a specific first-type wind turbine.

Preferably, however, the data-sharing arrangement comprises a central or shared analysis unit or module for analysing the wind data and for distributing it to the second-type wind turbines. Such a centralised data-sharing arrangement can be more economical to realise and to maintain.

As indicated above, information about several wind-related parameters is crucial for the accurate and safe performance of a wind turbine. Therefore, in a preferred embodiment of the invention, the wind parameter measuring system or "measurement equipment" of a first-type wind turbine of the wind park is realised to collect wind-related parameters comprise one or more of the group of parameters comprising wind speed, wind direction, wind temperature, and may be realised to collect information concerning any other relevant parameter. Preferably, a wind parameter measuring system of a wind turbine of the first type comprises one or more of the group of wind speed sensor, wind vane, temperature sensor, and may comprise any other suitable sensor capable of collecting and delivering wind-related measurements.

The wind park can be set up to comprise a certain fraction of first-type wind turbines, while the remainder comprises second-type wind turbines. Preferably, at most half of the wind turbines of the wind park are wind turbines of the first type. Such a realisation ensures accurate response of all the wind turbines to the momentary wind conditions, while ensuring considerable savings in the construction of the wind park. The first-type wind turbines can be distributed in any manner over the wind park. Preferably, however, the distribution is essentially homogenous, so that the first-type wind turbines and the second-type wind turbines are relatively evenly distributed. Of course, a somewhat "inhomogeneous" distribution may be desirable in some cases. For example, it may be preferable to place a slightly higher proportion of first-type wind turbines downwind of a cluster of other wind turbines, since the wind speed and/or the wind direction behind such a cluster can be affected to some extent by those upwind turbines.

The wind data from a first-type wind turbine can simply be forwarded as such to any other second-type wind turbine, preferably to second-type wind turbines in the neighbourhood of that first-type wind turbine. However, for a more controlled and accurate response to changes in the wind conditions over the wind park, the step of processing the wind-related parameters preferably comprises computing an average, preferably a weighted average, of a wind-related parameter provided by one or more wind turbines of the first type. The weighted averaged data is then provided, in a form usable by a turbine controller, to recipient second-type wind turbines.

In a prior art wind park, a yaw-direction zero-point of the yaw controller of a wind turbine can be manually configured at the outset. For example, the yaw direction zero-points can be calibrated during installation of the wind turbines, using a compass or similar tool. The zero points of all turbine yaw systems can initially be configured to point towards the magnetic north pole. Any correction to the yaw-direction zero-points for the turbines of a prior art wind park can be individually carried out on the basis of wind data collected by each turbine during the first few weeks or months of operation. In the wind park according to the invention, therefore, the step of processing the wind-related parameters preferably comprises computing or determining a yaw-direction zero-point for a wind turbine of the second type on the basis of wind-related parameters collected by the first-type wind turbines over a period of time. Of course, an advantage of this arrangement is that a second-type wind turbine can dispense with any yaw correction software, but can simply draw on the information collected by its neighbouring first-type wind turbine(s). The zero-points of the second-type wind turbines need not even be configured at manufacture. It might be sufficient to operate a first-type wind turbine for a relatively brief duration, and to use the collected wind data to roughly estimate a zero-point for a neighbouring second-type wind turbine, which can then adjust its yaw angle and commence operation.

The steps of the method according to the invention can be carried out by a computer program product, when the computer program product is loaded into a memory of a programmable device, for example into the memory of a computer of a park pilot. If the data-sharing arrangement is a distributed system, the computer program product can be realised to run on, for example, a main computer of various wind turbines, at least on the main computers of the wind turbines of the first type.

The wind behaviour can exhibit not insignificant differences across a wind park, particularly if this is a very large wind park, or if the geography of the location affects the wind. In a further preferred embodiment of the invention, therefore, the wind park comprises at least one group of wind turbines, wherein a group comprises a number of neighbouring wind turbines, and wherein at least one wind turbine of the group is a wind turbine of the first type. The groups can be virtual groups, and can be organized or compiled according to known differences in the wind behaviour over the wind park, or in response to wind data collected over time.

Preferably, the measurement system of a first-type wind turbine is also realised as a redundant system, comprising backup sensors that can commence or continue delivering data if one or more first sensors should fail. Even so, such a backup might also fail. Therefore, in a particularly preferred embodiment of the invention, a first-type wind turbine is realised to "switch over" to act as a second-type wind turbine. This can be a simple corrective measure taken so that this wind turbine can continue to operate until its measurement system has been repaired or replaced. As long as its measurement system is down, this first-type wind turbine, acting as a second-type wind turbine, can receive wind data, for example interpolated wind data, from the nearest first-type wind turbines in its neighbourhood.

Equally, a wind turbine acting as a second-type wind turbine might in fact also be equipped with a measurement system, which can take over in the event of a failure of the measurement system of a first-type wind turbine in the neighbourhood. This can be an option for a wind park that was upgraded from being a prior art wind park to a wind park according to the invention, since the wind turbines of that wind park will have been equipped with measurement systems. In such a situation, the measurement system of second-type wind turbine can deploy and can commence to feed its wind data into the data-sharing arrangement, so that this wind turbine effectively acts as a first-type wind turbine.

Preferably, each group comprises a number of first-type wind turbines, while the remainder of the wind turbines in that group are second-type wind turbines. In a particularly preferred embodiment of the invention, a group comprises only one wind turbine of the first type. This allows a very economical realisation of a wind park. The wind data collected by the first-type wind turbine of a group can be provided only to the second-type wind turbines of that group. In this way, these second-type wind turbines receive the most accurate wind data, i.e. wind data collected in their immediate neighbourhood. Such a realisation allows a more optimal control of the wind turbines of the wind park.

A very economical realisation is given when the wind park comprises only one group, and this group comprises a minimum of first-type wind turbines. Of course, to respond quickly in the event of a failure, one or more second-type wind turbines of that group can be equipped with a measurement system so that such a second-type wind turbine can take over in the event of a failure of the measurement system of the first-type wind turbine. As mentioned above, this can be the case when the second-type wind turbine was "inherited" from a prior art wind park and is already equipped with a measurement system, but it may also be expedient when constructing a wind park according to the invention, to equip a wind turbine, intended to act as a second-type wind turbine, with a measurement system, so that it can, if necessary, take over the functions of a first-type wind turbine.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a block diagram representation of a wind park according to an embodiment of the invention;
Fig. 2 shows a schematic rendering of a wind park according to another embodiment of the invention.

In the diagrams, like numbers refer to like objects throughout. Objects in the diagrams are not necessarily drawn to scale.

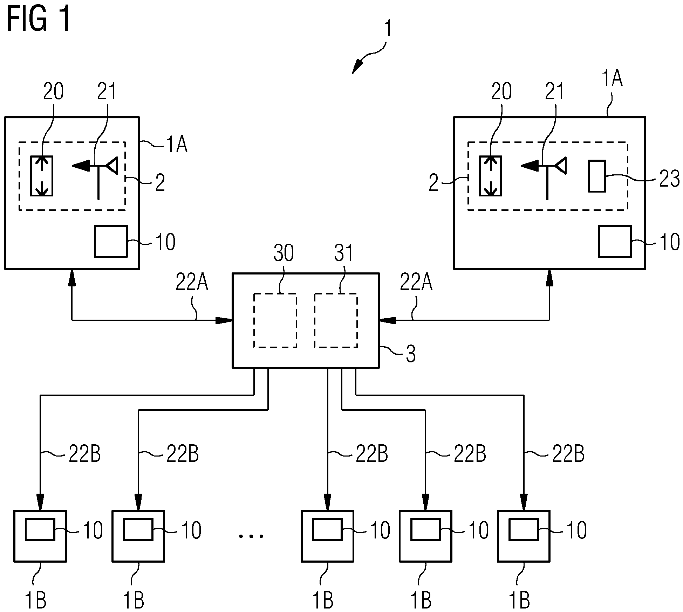

Fig. 1 shows a block diagram representation of a wind park 1 according to an embodiment of the invention. The wind park 1 comprises a number of wind turbines 1A of the first type. Only two are indicated here, but the wind park 1 could comprise any number of wind turbines 1A of the first type. These are each equipped with measurement equipment 2. A measurement equipment arrangement 2 can comprise, for example, an anemometer such as a sonic anemometer 20, a wind vane 21, a thermometer 23, etc. The measurement equipment 2 can be the same for each wind turbine 1A of the first type, but does not have to be, as indicated here.

The wind park 1 comprises a data-sharing arrangement 3, which collects the wind data outputs from the wind turbines 1A of the first type. The data-sharing arrangement 3 is shown here for the purpose of clarity as a separate block or unit, for example at a single location such as in a park pilot for the wind park, but it could be realised as a distributed system, for example by combining the processing power of processing units 10 of the first-type wind turbines 1A and any number of second-type wind turbines 1B. Such a processing unit 10 might be a turbine controller, an interface computer, etc., physically located in a wind turbine 1A, 1B. The data-sharing arrangement 3 is shown here to comprise an analysis module 30 for analysing wind data input 22A and for computing wind data output 22B.

The data-sharing arrangement 3 can simply distribute the wind data 22A received from the wind turbines 1A of the first type to the wind turbines 1B of the second type. For example, for a group of ten wind turbines, one of which is of the first type, has measurement equipment 2 and delivers wind data 22A, the data-sharing arrangement 3 could simply forward that wind data 22A in an essentially unprocessed manner as wind data input 22B to the remaining nine wind turbines 1B of that group. Alternatively, for a better response of the wind turbines to the prevailing weather conditions, the data-sharing arrangement 3 can analyse the wind data 22A received from the wind turbines 1A of the first type. For example, it could calculate weighted mean or average values for wind speed, wind direction etc., to reduce the influence of aberrations in the measurements and to reduce known park effects (such as wake or turbulence) on the measurements to give derived wind data input 22B, which can then be forwarded to the wind turbines 1B of the second type. Equally, a first-type wind turbine 1A can use its wind data 22A "first hand", or can send it directly, i.e. unused, to the data-sharing arrangement 3, and can receive a processed version back from the data-sharing arrangement 3.

As indicated above, the wind turbines of a prior art wind park can use measurements received from their measurement equipment to determine or calibrate a yaw-direction zero-point. This zero-point can be used as a reference for any yaw adjustment that needs to be carried out, for example in response to a change in the wind direction. Since the wind turbines 1B of the second type do not avail of any wind-direction measurement means, the calibration is preferably carried out using shared data generated by the wind turbines of the first type. To this end, the data-sharing arrangement 3 is shown here to comprise a yaw calibration module 31 for computing a yaw angle correction, which, for example, can be sent to a second-type wind turbine 1B along with the wind data output 22B. A yaw calibration can be quite accurate for a wind turbine 1B of the second type when wind data 22A originating from one or more nearby wind turbines is used, since the wind direction may be assumed to be essentially uniform over a portion of a wind park. Furthermore, the data-sharing arrangement 3 could also collect wind turbine performance data and analyse this to detect whether the yaw-direction zero-point of a wind turbine 1B of the second type might require a slight adjustment. This could be detected in the case of discrepancies in output power, for example, for neighbouring wind turbines that can otherwise be expected to deliver the same output power under the same operating conditions.

The data-sharing arrangement 3 preferably "knows" the relative positions of the wind turbines 1A, 1B in the wind park, and can therefore relate the wind data received from one wind turbine 1A of the first type to other, neighbouring wind turbines 1B of the second type. This knowledge allows the data-sharing arrangement 3 to send tailored or custom wind data input 22B to specific wind turbines 1B of the second type.

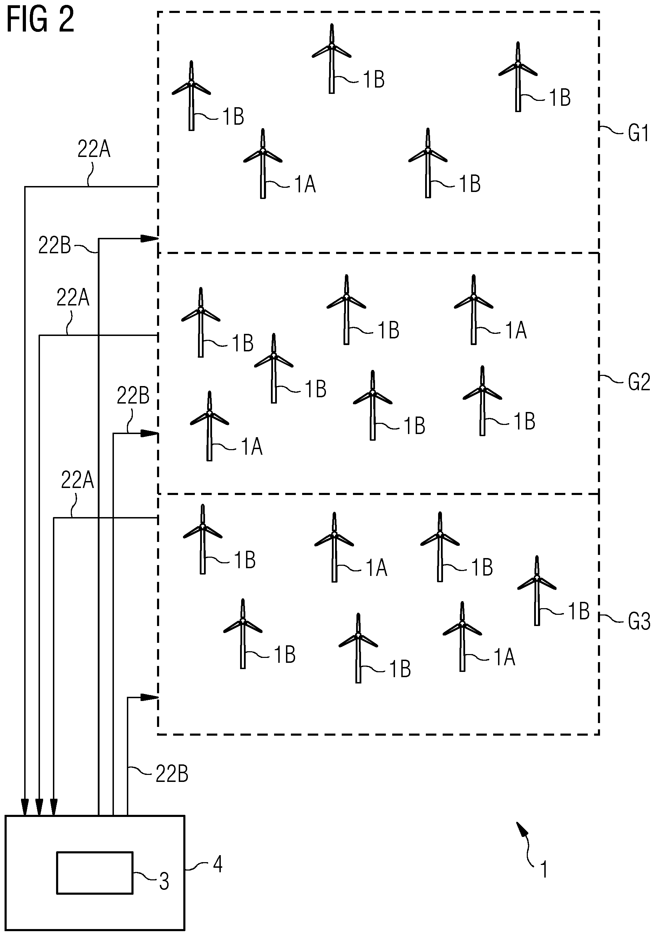

Fig. 2 shows a schematic rendering of a wind park 1 according to another embodiment of the invention. Here, the wind park 1 comprises groups G1, G2, G3 of wind turbines 1A, 1B. Wind data 22A collected by the wind turbines 1A of the first type is forwarded to a data-sharing arrangement 3, shown here to incorporated in a park pilot 4 of that wind park 1. The data-sharing arrangement 3 can analyse the data 22A on the basis of the group topology, and can generate wind data output tailored to each group G1, G2, G3, or tailored to the wind turbines 1B of the second type in each group G1, G2, G3.

The groups G1, G2, G3 can be organised in a virtual manner and can be re-organised as required to give a different group topology. For example, if the measurement equipment of the first-type wind turbine 1A of the first group G1 should fail, and that first group does not have any other first-type wind turbine 1A, the group G1 can be redefined to include the nearest first-type wind turbine 1A of a neighbouring group, for example the first-type wind turbine 1A shown in the upper right of group G2, so that the second-type wind turbines of the original first group are continually supplied with wind data input. Of course, the groups need not be exclusive, and may "overlap", so that, for example, a first-type wind turbine 1A delivers wind data output for one or more groups. Here, the term "group" is only used in reference to the wind data sharing, and such a group need not have anything to do with a collection or set of wind turbines (often also referred to as a group) that is collectively controlled by a park pilot, i.e. that collectively receives setpoints or reference values from a park pilot.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A wind park (1) comprising
- at least one wind turbine (1A) of a first type, wherein a wind turbine (1A) of the first type comprises a wind parameter measuring system (2) for measuring wind-related parameters;
- at least one wind turbine (1B) of a second type, wherein a wind turbine (1B) of the second type does not comprise a wind parameter measuring system (2); and
- a data-sharing arrangement (3) for providing a wind turbine (1B) of the second type with wind-related parameters derived from wind-related parameters collected by a wind turbine (1A) of the first type.

2. A wind park according to claim 1, wherein the data-sharing arrangement (3) is realised to share data over a network that connects control means (10) of the wind turbines (1A, 1B) of the wind park (1).

3. A wind park according to claim 2, wherein the data-sharing arrangement (3) is located in a park controller (4) of that wind park (1).

4. A wind park according to claim 2 or claim 3, wherein the data-sharing arrangement (3) comprises a distributed system (3), which distributed system (3) comprises processing units (10) of the wind turbines (1A, 1B) of the wind park (1).

5. A wind park according to any of the preceding claims, wherein the wind-related parameters comprise one or more of the group of parameters comprising wind speed, wind direction, wind temperature.

6. A wind park according to any of the preceding claims, wherein a wind parameter measuring system (2) of a wind turbine (1A) of the first type comprises one or more of the group of anemometer (20), wind vane (21), temperature sensor.

7. A wind park according to any of the preceding claims, wherein at most half of the wind turbines of the wind park (1) are wind turbines (1A) of the first type.

8. A wind park according to any of the preceding claims, comprising at least one group (G1, G2, G3) of wind turbines (1A, 1B), wherein a group (G1, G2, G3) comprises a number of neighbouring wind turbines (1A, 1B), and wherein at least one wind turbine of a group (G1, G2, G3) is a wind turbine (1A) of the first type.

9. A wind park according to claim 8, wherein a group (G1) comprises only one wind turbine (1A) of the first type.

10. A wind park according to claim 8 or claim 9, wherein the wind park (1) comprises only one group.

11. A wind turbine (1A, 1B) for use in a wind park (1) according to any of claims 1 to 10, wherein the wind turbine (1A, 1B) is realised to perform as a wind turbine (1A) of the first type, with a wind parameter measuring system (2) for measuring wind-related parameters and a wind data output (22A) for feeding the wind-related parameters into a data-sharing arrangement (3) of the wind park (1); or as a wind turbine (1B) of the second type, with a wind data input (22B) for obtaining wind-related parameters from a remote source (2) in that wind park (1).

12. A method of controlling a wind park (1) according to any of claims 1 to 10, which method comprises the steps of
- collecting wind-related parameters by a wind parameter measuring system (2) of a wind turbine (1A) of the first type;
- processing the wind-related parameters in a data-sharing arrangement (3) of the wind park (1); and
- providing the processed wind-related parameters to a wind turbine (1B) of the second type.

13. A method according to claim 12, wherein the step of processing the wind-related parameters comprises computing an average, preferably a weighted average, of a wind-related parameter provided by one or more wind turbines (1A) of the first type.

14. A method according to claim 11 or 12, wherein the step of processing the wind-related parameters comprises determining a yaw-direction zero-point for a wind turbine (1B) of the second type on the basis of wind-related parameters collected over a period of time.

15. A computer program product for carrying out the steps of the method according to any of claims 11 to 14, when the computer program product is loaded into a memory of a programmable device.
